# EUROPEAN PATENT APPLICATION

(11) **EP 4 063 447 A1**
(43) Date of publication of application: **28.09.2022**
(21) Application number: 22164525.2
(22) Date of filing: 25.03.2022
(51) Int. Cl.: C08L 7/00, B60C 1/00

(54) **ECOFRIENDLY BIO-WASTE EXTRACT AGENT AND A GENERAL-PURPOSE RUBBER COMPOSITION THEREOF**

(30) Priority: 26.03.2021 IN 202141013563
(71) Applicant: Apollo Tyres Ltd., 602105 Tamil Nadu (IN)
(72) Inventor: NVK, Surender, 602105 Tamil Nadu (IN); AMETA, Rohit, 602105 Tamil Nadu (IN); RAMAKRISHNAN, Subramanian, 602105 Tamil Nadu (IN); MOHAMED, Pulikaparambil Kochaidrew, 602105 Tamil Nadu (IN)
(74) Representative: Michalski Hüttermann & Partner Patentanwälte mbB

(57) **Abstract**

The present invention discloses a curable rubber composition comprising:
a rubber component in an amount of 100 PHR;
at least one filler in an amount from 10 to 110 PHR;
characterized in that said curable rubber composition comprises alpha-tocopherol as an extractable residue from banana peels in an amount from 0.1 to 15 PHR.

The curable rubber composition may also further comprise a curative package in an amount from 0.5 to 15 PHR. The present invention further discloses a crosslinked rubber composition obtained by cross-linking such a rubber composition, and a method of preparing a tyre, and a tyre.

## Description

### Field of Invention

The present invention relates to a curable rubber composition comprising a rubber component, alpha-tocopherol, and at least one filler. The curable rubber composition of the present invention is environment friendly and helps achieve better rubber compounds which in turn results in improved rubber products. The present invention further relates to a cross-linked rubber composition obtained by cross-linking such a rubber composition, a method of preparing a tyre, and a tyre.

### Background of the Invention

Elastomer blends are prepared by mixing two or more elastomers to achieve the desired properties. These blends can be homogeneous (miscible) or heterogeneous(immiscible) in nature. Chemical differences like polarity, solubility parameter of elastomers may limit them in forming a miscible blend and as a result phase separation may occur. Blending of elastomers with different properties are encouraged to achieve desired application properties with benefits such as reduced material cost, improved processability and better balance in cure properties.

In elastomers, fillers are used for reinforcement to enhance properties. In elastomer products, filler distribution and its dispersion have a great impact on ultimate product performance.

A compatibilizer or a homogenizer is often added to a blend to reduce the interfacial energy between the phases of rubbers to make it effectively miscible with each other and thereby permitting filler dispersion during mixing and improve processibility. It also improves the properties like viscosity etc., without having any major effects on other performance. These are used in general in many of the rubber compounds and more specifically when blends of rubbers, larger quantities of fillers or a blend thereof are used.

Commercially available compatibilizer or homogenizing agent is used as performance chemical for rubber compounding and products made thereof. These materials are derived from non-renewable petroleum based raw materials by steam cracking of heavy petroleum process and subsequent blending with other materials.

Petroleum based materials are considered as non-sustainable, affecting environment significantly and this calls for the urgent development of an alternative material from a sustainable source to support the environment.

Extensive research is going on with respect to the development of sustainable materials across the world for various applications.

Performance of a rubber product is determined by various properties depending on the final applications. Considering the present scenario of tire industry; for an automobile tire, a balance of three parameters - traction, low rolling resistance and wear resistance which is otherwise called as magic triangle for tire performance is considered very important. In other type of products, specific properties pertaining to that application becomes more relevant. In all these cases the proper dispersion of the various kinds of rubber and the filler which creates the best of the rubber filler interaction plays a major role in the performance enhancement.

The object of the present invention is to utilize sustainable green materials to produce environment friendly compatibilizer or bio based-homogenizing agent, which can help to achieve better rubber compounds and manufacture better rubber products.

For manufacturing rubber products, blend of various rubbers is used. But when they are mixed, there is always a question of miscibility. Here miscibility refers to the blend of macromolecules of polymers which are dispersed uniformly in the rubber compound. There are various elastomer characteristics which may limit desired miscibility within rubber blends such as differences in polarity, Mooney viscosity, solubility parameter and molecular weight. When it comes to the filler, it is the ability of the filler to have the best interaction with the rubber matrix. When blends are used there is a possibility of phase separation in the micro or macro level to occur within the rubber matrix and which may not provide desired thermo - mechanical properties to the rubber product. This phase incompatibility may get reflected in the properties and performance.

The role of homogenizing agent is to enhance the interaction between the various rubbers and fillers in the rubber blends. Incorporating homogenizing agent into the rubber matrix also enhances processability and filler distribution.

The problem existing in state of the art is that many of the elastomer blends are limited in miscibility, owing to the differences in their polarity, Mooney viscosity, solubility parameter and high molecular weight and as a consequence, phase separation between elastomers is generally observed. Due to this phenomenon, filler localization within the elastomer matrix is very likely which results in poor dispersion of filler that leads to deterioration in physio-mechanical properties.

It is important to use homogenizing agent for rubber blends to stabilize the blend morphology and for better filler dispersion and to thereby improve physio-mechanical rubber properties.

In general, these materials are manufactured from petroleum based raw materials which contains aliphatic and aromatic material fractions. As it is well known, petroleum based raw materials are non-renewable and require tedious manufacturing processes to obtain user friendly chemicals.

Considering these deficiencies, this is the right time to search for an alternative, greener or bio-waste raw materials to serve the purpose.

There are prior art documents which though relevant as state of the art have not addressed and solved the problem as identified by the present invention.

The prior art document US2020/0139762 A1 (Toyo Tyre and Rubber Co Ltd) discloses a tire rubber composition comprising a diene-based rubber component, and fruit extract and sodium carbonate in an amount of 1.0 to 10 parts by weight for 100 parts by weight of the diene-based rubber component. In the tire rubber composition of this prior art document the total amount of the rubber component is regarded as 100 parts by mass in the rubber composition for extract in the composite powder which is preferable from 0.01 to 8.0 parts.

The prior art document US8188168 B2 (Toyo Tyre and Rubber Co Ltd) discloses a tire rubber composition comprising a diene-based rubber component, and banana fiber in an amount of 0.1 to 20 parts by weight for 100 parts by weight of the diene-based rubber component.

In the tire rubber composition of this prior art document, the average fiber width of the banana fiber is from 1 to 500 µm and the average fiber length thereof is from 0.1 to 5 mm.

The prior art document "GC-MS analysis of bioactive components from banana peel (Musa sapientum peel)"; Jyotsna S. Waghmare* and Ankeeta H, Kurhade, Department of Oils, Oleochemicals & Surfactant Technology, Institute of Chemical Technology, NP Marg, Matunga, Mumbai, India, (ISSN: 2248 -9215, CODEN (USA): EJEBAU), discloses that the extraction of different molecules from banana peel fruit using GCMS technique. Different types of molecules are identified which shall be useful for food and medicinal industry.

The prior art document "Investigation of using waste banana peels in EPDM as bio-based filler"; İsmail Kutlugün Akbaya and Ahmet Güngöra,* INTERNATIONAL ADVANCED RESEARCHES and ENGINEERING JOURNAL, Volume 02 Issue 02, August, 2018, (e-ISSN: 2618-575X), discloses the effects of some biological wastes such as banana peels on the physical and mechanical properties of ethylene-propylene-diene monomer (EPDM) rubber. The obtained bio-based filler material was added into EPDM matrix with different ratios. In this study processed Banana peel powder is used as a filler.

The prior art document "INVESTIGATION OF WASTE BANANA PEELS AND RADISH LEAVES FOR THEIR BIOFUELS POTENTIAL", Abdul Majeed Khan, Shaista Khaliq and Rabia Sadiq, Bull. Chem. Soc. Ethiop. 2015, 29(2), 239,-245, discloses the production of biofuels from banana peels and radish leaves.

The prior art document "Mechanical Characterization of Banana Fiber Reinforced Epoxy Bio-Composite", Vineet Kumar, Jitendra Panchal, International Journal of Scientific Research Engineering & Technology (IJSRET), ISSN 2278 - 0882, Volume 6, Issue 5, May 2017, discloses that banana fiber reinforced epoxy composite show many advantages such as low density, low cost, environmentally friendly, biodegradable and high specific mechanical strength.

The prior art document "Phenolic compounds within banana peel and their potential uses: A review; Hang T. Vua,b,, Christopher J. Scarletta, Quan V. Vuonga, Journal of Functional Foods, 40 (2018) 238-248, ISSN 1756-4646) discloses that phenolics within banana peels have been found to possess potent antioxidant and antimicrobial properties and are linked with various health benefits. Therefore, it is worthwhile to recover phenolics from this by-product for further utilization in food and pharmaceutical industries.

The document "EXTRACTION AND PROPERTIES OF CELLULOSE FROM BANANA PEELS", Riantong Singanusong, Worasit Tochampa, Teeraporn Kongbangkerd, and Chiraporn Sodchit, Suranaree J. Sci. Technol. 21(3):201-213, (ISSN : 0858-849X), discloses the extraction of cellulose from banana peel due to the removal of fat, protein, and pigments from banana peel cellulose (BPC).

### Summary of the Invention

The present invention relates to a curable rubber composition comprising a rubber component in an amount of 100 parts by weight of rubber, and at least one filler in an amount from 10 to 110 PHR, wherein the curable rubber composition comprises alpha-tocopherol in an amount from 0.1 to 15 PHR or alpha-tocopherol as an extractable residue from banana peels in an amount from 0.1 to 15 PHR. The curable rubber composition may also further comprise a curative package in an amount from 0.5 to 15 PHR.

More particularly, the present invention relates to a rubber composition comprising polybutadiene rubber, styrene butadiene rubber, natural rubber, polyisoprene or a mixture thereof as rubber component, hydrocarbon fillers or mineral fillers or mixtures thereof as filler, and sulphur, peroxide, or metal-oxide ingredients such as zinc oxide as curative package in the amounts as indicated above.

### Detailed Description of the Invention

In the context of this invention the unit "PHR" denotes "per hundred parts by weight of rubber" as it is commonly understood in the art. It is further understood that in formulations discussed in connection with the present invention the PHR amount of all rubber components adds up to 100. The PHR data (parts per hundred parts of rubber by weight) used in this specification are the conventional quantitative data used for mixture formulations in the rubber industry. The amount added in parts by weight of the individual substances in this specification is based on 100 parts by weight of the total mass of all of the solid rubbers present in the mixture.

The present invention provides that the extractable residue from banana peels comprise several bio-based active components like estragole, hexadecanoic acid ethyl ester, epicatechin, gallocatechin, p-coumaric acid ethyl ester, 1,2 benzenedicarboxylic acid mono (2-ethylhexyl) ester, beta-tocopherol and alpha tocopherol. Among the above-indicated components, alpha tocopherol is the major constituent of the extractable residue from banana peels as shown below:

| **Weight percent** | **Component** |
|---|---|
| 10.68 to 11.68 % | Estragole |
| 9.26 to 10.26 % | Hexadeconic acid ethyl ester |
| 9.47 to 10.47% | Epicatechin |
| 8.08 to 9.08% | Gallocatechin |
| 3.78 to 4.78% | p-coumaric acid methyl ester |
| 12.97 to 13.97% | 1,2 Benzenedicarboxylic acid mono (2-ethylhexyester) |
| 10.87 to 11.87% | beta-tocopherol |
| 30.85 to 31.85% | alpha - tocopherol |

In an embodiment, the present invention provides a curable rubber composition comprising a rubber component in an amount of 100 PHR, and at least one filler in an amount from 10 to 110 PHR, wherein the curable rubber composition comprises alpha-tocopherol as an extractable residue from banana peels in an amount from 0.1 to 15 PHR. Alpha-tocopherol plays the role of homogenizer in rubber compounding.

It is important to use homogenizer for rubber blends to achieve desired properties.

Bio-based materials which are renewable, ecofriendly and cause less impact on human health and environment can be the solution to address this problem. Bio-based materials contain various potential organic molecules that can be separated by extraction technique using organic solvents.

The following steps reveal the preparation of bio-extracted homogenizer agent as given below:
1. Waste banana peels are collected and cut into small pieces.
2. The cut pieces of banana peels are then transferred into a beaker and immersed in an alcoholic based organic solvent.
3. The beaker containing the cut pieces of banana peels immersed in organic solvent is heated and the heating is stopped after the temperature reaches the boiling point of the organic solvent. The organic solvent is allowed to cool at ambient temperature.
4. The extracted material is filtered using conventional method.
5. The excess organic solvent present in the extracted material is separated by using Rotary evaporator.
6. Finally, the high viscous residue is dried in vacuum oven or hot air oven at 100 degree Celsius.
7. A dark brown high viscous material is obtained.

The extractable residue from banana peel may be then characterized by analytical techniques to understand the structure of organic molecules. Citrus and non-citrus fruits contain ester groups, which can also behave like homogenizing agent.

The extraction of useful molecules from wasted fruit (banana) peels is demonstrated here. Through the extraction process of fruit (banana) peels, a highly viscous dark colored extractable residue material was obtained. This extractable residue was mixed in rubber compounds to understand its behavior in rubber blend matrix. The effect of the above material was studied in Carbon black and Silica based rubber compounds and was investigated for physical properties and dynamic properties.

When this banana peel extract was used as a compatibilizer (bio-homogenizing agent), the Mooney viscosity of the compound was found to be higher than with conventional compatibilizer (homogenizing agent). Without being bound to specific theory, it it assumed that it is due to the presence of hydroxyl groups in the molecules which form networks by hydrogen bonding.

This banana peel extract also shows faster cure rate characteristics in rubber compound.

Alpha-tocopherol (Vitamin-E) is the major constituent of banana fruit-peel which plays a role of homogenizer in rubber compound. It has an antioxidant property which enhances the durability of rubber product. Vitamin E is also stable on heating at temperatures from 150°C to 175°C, so it will not degrade at the time of mixing and molding of rubber compound.

To understand the impact of this newly developed material as a compatibilizer (bio-homogenizing agent), various doses were tried in rubber compound.

The term "alpha-tocopherol as an extractable residue from banana peels" particularly refers to banana peel extract manufactured by the extraction process as described above, wherein the obtained extractable residue material comprises alpha-tocopherol. In other words, the present invention can provide a curable rubber composition comprising a rubber component in an amount of 100 PHR, and at least one filler in an amount from 10 to 110 PHR, wherein the curable rubber composition comprises from 0.1 to 15 PHR banana peel extract manufactured by the extraction process as described above that comprises alpha-tocopherol.

The alpha-tocopherol (bio-based homogenizing agent) which is also referred to herein below as the banana peel extract homogenizer improves the miscibility of the polymer blend and improves the filler dispersion. The amount of alpha-tocopherol (bio-based homogenizing agent) can be optimized on the basis of different rubbers and are selected accordingly for compound recipe in polymer blends.

In another embodiment, the present invention provides that the rubber component in the curable rubber composition is selected from polybutadiene rubber, styrene butadiene rubber, natural rubber, polyisoprene or a mixture thereof. These are general purpose rubbers used in rubber compositions.

According to a preferred embodiment, the butadiene rubber is selected from polybutadiene, functionalized polybutadiene rubber, emulsion-styrene butadiene rubber (ESBR), solution-styrene butadiene rubber (SSBR), functionalized SSBR, or a combination thereof.

In a still further embodiment, the present invention provides that the filler in the curable rubber composition is selected from hydrocarbon fillers or mineral fillers or mixtures thereof.

Fillers give reinforcement in rubber matrix to achieve desired physical and dynamic properties. Examples of hydrocarbon fillers include carbon black, graphene, Carbon Nano tubes, and fullerene. Examples of mineral fillers include silica, nano clay, inorganic oxides as well as inorganic hydroxides.

According to a preferred embodiment, the filler is selected from carbon blacks, silica, surface treated silica, surface treated carbon blacks or a combination thereof. Examples for carbon blacks are N134, N220, N330, N339, N379, also 2109, 2115, 2123, 2125 from Birla carbon. Examples for silica are Zeosil - 1085MP, 1115MP, 1165MP, HRS 1200MP; Premium 200MP from Rhodia; Ultrasil - 5000GR, 7000GR, 9100GR from Evonik Industries; Hi-sil - EZ120G(G-D), EZ160G (G-D), 190G (G-D), EZ200G (G-D), 210, 255CG-D, 315G (G-D) from PPG Industries. Examples for surface treated silica are Agilon 400, Agilon 454, Agilon 458 from PPG Industries. Examples for surface treated carbon blacks are 2125XZ from Brila Carbon.

In an embodiment, the present invention utilizes extractable residue from banana peel in carbon black/silica based compound. The compound in the present invention can be used to manufacture rubber goods.

In an embodiment, the extractable residue from banana peel of banana (raw or fruit) is used in rubber compound specifically usable for tires, wherein the doses of extractable residue are 15 PHR.

In an embodiment, the present invention provides that the curable rubber composition further comprises a curative package in an amount from 0.5 to 15 PHR. The curative package preferably is selected from sulphur, peroxide, or metal-oxide ingredients such as zinc oxide. The curative package vulcanizes the rubber composition.

Another aspect of the present invention relates to a cross-linked rubber composition that is obtained by cross-linking a rubber composition according to the invention.

The present invention also relates to a method of preparing a tyre, comprising the steps of:
- providing a tyre assembly comprising a rubber composition according to the invention; and
- cross-linking at least the rubber composition according to the invention in the tyre assembly.

The present invention also encompasses a tyre comprising a tread, wherein the tread comprises a cross-linked rubber composition according to the invention.

Certain aspects and embodiments of the present invention will now be illustrated by way of examples and the accompanying drawings.

### EXAMPLES

### EXAMPLE 1

Rubber was masticated for 30 seconds and then filler was added into mixer. It was mixed for 2 minutes. Sweeping step was done two times in between. The extractable residue from banana peels (also referred herein as banana peel extract homogenizer) was added into the compound and mixed for 1 minute. Subsequently, activator was added and mixed for 1 minute and then master batch was dumped. Master batch was fed in mixer after 1 minute. Thereafter, curatives were added to compound and mixed for 2 minutes. Finally, the final batch was dumped after proper mixing.

The same process was carried out for petroleum based homogenizing agent also in order to compare the results.

The test standards and results obtained from the above example are provided in the Tables below:

| **Test** | **Procedure** | **Relevant value(s)** | **Explanation** |
|---|---|---|---|
| FTIR (Fourier Transformation Infrared spectrophotometer) | ASTM D 2702 | Characteristic peaks according to functional group | From interpretation of FTIR spectrum, it can be explained the type of functional groups present in molecules |
| Ash Content | ASTM D 4574 | Presence of inorganic components | Presence of non-carbon components (that is,) inorganic components in percentage after ashing in a muffle furnace. |
| Loss on Heating (Volatile materials) | ASTM D 4571 | Presence of volatile organics and moisture | Volatile materials and moisture in percentage can be understood. |
| pH Content | ASTM D 1512 | Acidic or basic nature of material | pH value of material indicates the nature of material as it is acidic or basic |
| MDR | ASTM D 5289 | TS2, TC90, ML, MH | Rheological properties and curing characteristics of the rubber can be understood. |
| Mooney viscosity | ASTM D1646 | Mooney scorch | Used to measure the resistance to flow of the rubber at a relatively lower shear rate and relates to average molecular weight of the rubber. |
| Physicals -Tensile, Hardness and Tear (Unaged and Aged) | ASTM D412, ASTM D2240, ASTM D624 | M100, M200, M300, Tensile strength, Tear strength, elongation at break and Hardness. | These parameters are used to understand the intrinsic strength of rubber. Tear strength helps to understand the catastrophic growth of cut on the application of stress. Hardness is the measure of resistance to indentation. |
| DMA | ASTM D5992 | Tan Delta, Elastic Modulus E' (MPa) ,Viscous-Modulus E" (MPa) | Used to study the properties of viscoelastic behavior of material, where the input is given in the form of dynamic oscillations and the response is measured by the ratio of E' and E", where E' gives the elastic behavior and E" gives the viscous behavior of the material. Tan delta is a damping term which is a measure of ratio of energy dissipated as heat to the maximum energy stored in the material during one cycle of oscillation. |

The table above shows the test standard used for the experiments performed

### Experiment 1

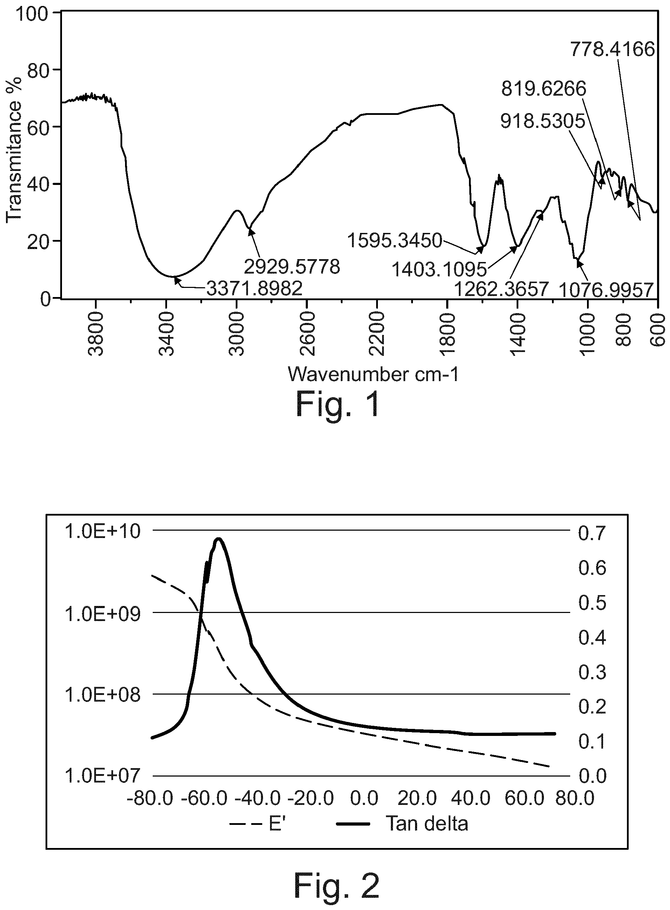

**Characterization:** Fourier Transform Infrared Spectroscopy (FTIR) analysis of fruit peel extract (banana peel extract) was carried out according to ASTM D2702 and spectrum is shown in **Figure** 1.

**Ash content:** Ash content was done as per ASTM D4574 test method. Ash content at 950°C is found 9.23% in (banana) fruit-peel extract. The residue of ash content was digested in mineral acid and diluted with distilled water and this brings metals in solution form and it was analyzed in ICP-MS instrument. It is observed that the potassium concentration is high while other metals are present in trace amount.

**Conclusion:** From FTIR spectrum it was observed that broad and strong peak appear at 3371cm⁻¹, 2929 cm⁻¹ and peak at 1403 cm⁻¹. Presence of these peaks indicates that Banana peel extract contains majorly -OH groups. The peak at 1595 cm⁻¹ indicates the presence of aromatic type structure. Banana peel extract may be the mixture of aliphatic and aromatic molecules with hydroxy groups as a major component.

From Ash analysis of banana peel extract, it is found that 9.23% ash is present in banana peel extract and major component in ash is found as potassium element.

**Figure 2** shows a Dynamic Mechanical Analyser (DMA) graph indicating the glass transition (Tg) temperature for compound without any petroleum-based homogenizer agent and banana peel extract.

**Conclusion:** When more than two polymers are mixed without any homogenizer, there is a compatibility issue because of the polarity and chemical structure difference which hinders the compound properties.

This is verified by using Dynamic Mechanical Analyser wherein there are two definite glass transition (Tg) temperature peaks which clearly reveals that those polymers are not completely compatible, or they are immiscible.

Therefore, from **Figure 2** it is evident that there are two Tg peaks which indicates immiscibility.

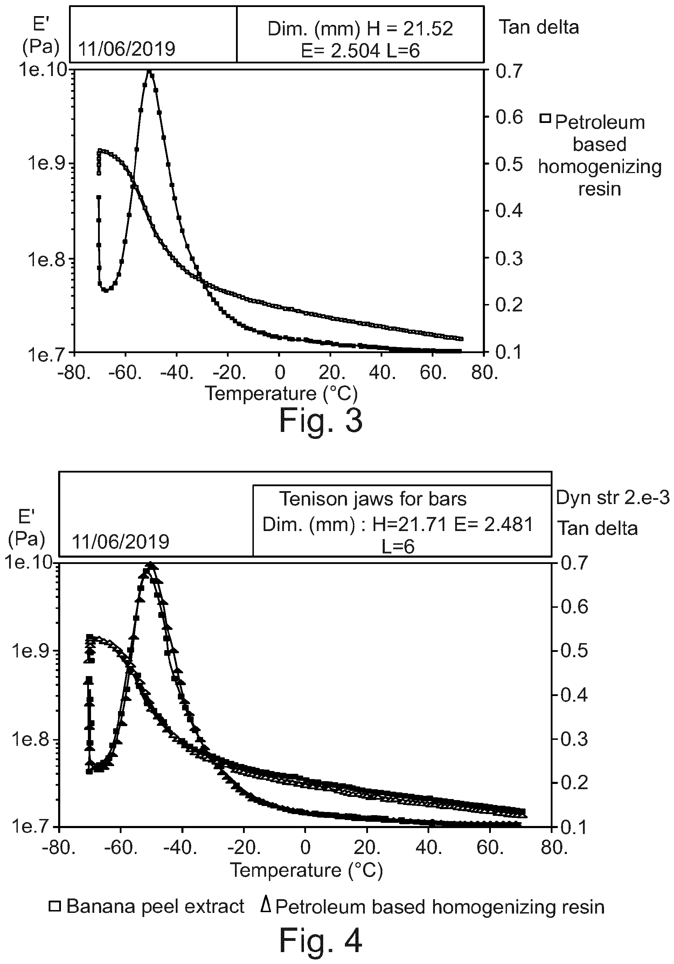

**Figure 3** shows a DMA graph indicating the Tg for banana peel extract which shows improved miscibility by reducing interfacial energy.

**Conclusion:** For developing a miscible blend, several factors play a role including the chemical nature of polymers, surface tension, interfacial energy, and phase separation. A homogenizer is added which reduces the interfacial energy and thus improves miscibility to a great extent.

To verify the miscibility of polymers, only one glass transition temperature should be achieved for a system of two or more polymer blends.

Accordingly, **Figure** 3 shows a single glass transition temperature (Tg) peak that confirms the blends are homogeneous in nature thereby showing that they are miscible in nature.

**Figure** 4 is also a DMA graph which shows a comparison of Tg with two compounds-one with petroleum based homogenizing agent and another with banana peel extract which shows that the phase difference is reduced by improving the miscibility of polymers.

**Conclusion:** For the polymer blends which have more than two polymers, a homogenizer is added to improve miscibility.

This improves the surface characteristics to reduce the energies between the phases and create a miscible blend of rubbers.

From **Figure 4****,** a one-to-one comparison of two compounds is seen- one having a homogenizer agent from petroleum-based sources and the other with banana peel extract.

It is evident that there is a single Tg peak which indicates miscibility among various rubbers.

It is also evident that banana peel extract showed a comparable Tg curve with respect to petroleum-based homogenizer agent which clearly indicates that it plays the role of homogenizer.

This banana peel extract can also replace the petroleum-based homogenizer agent for making miscible blends.

The DMA graphs and the conclusions drawn therefrom confirm that the banana peel extract shows the capability of a homogenizer.

### Experiment 2

### Loss on Heating: -

As per ASTM D4571 test method, Loss on heating at 105°C is found **8.79%.**

**pH Content:** -
pH content was tested using ASTM D 1512 and found to be **5.42** for banana (fruit) peel extract.

**Conclusion:** Volatile materials shall be both water or moisture content and other residual components in the banana peel extract. pH (5.42%) of banana peel extract found to be slightly acidic in nature.

### Experiment 3

This experiment describes compound mixed without both petroleum based homogenizing agent and banana peel extract homogenizer.

**Table 1. Formulation of the compound recipe without both homogenizing agent**

| **Ingredients** | **Dosage range (PHR)** | **Without both Homogenizing agent and Banana peel *extract Homogenizer* (PHR)** |
|---|---|---|
| **Natural Rubber (NR)** | 1 - 100 | 50 |
| **Poly Butadiene rubber (BR)** | 1 - 100 | 30 |
| **Styrene Butadiene rubber (SBR)** | 1 - 100 | 20 |
| **Banana peel extract *Homogenizer*** | 0.1 - 15 | 0 |
| **Homogenizing Agent** | 1 - 4 | 0 |
| **Carbon Black** - **HAF** | 20 - 60 | 40 |
| **Silica** | 2-10 | 10 |
| **Activator** - **Cure package*** | 0.5 - 25 | 14 |
| *Rubber chemicals as per standard formulations were added. | | |

**Table 2. MDR data of compound without both petroleum based homogenizing agent and Banana peel extract Homogenizer**

| **Description** | **M_{L} (dNm)** | **M_{H} (dNm)** | **Tₛ₂ (min)** | **T_{C 90}(min)** |
|---|---|---|---|---|
| **Without both Homogenizing agent and Banana peel extract *Homogenizer*** | 2.60 - 3.00 | 20.40 - 20.80 | 2.80 - 3.20 | 5.50 - 5.90 |

**Table 3. Dynamic mechanical properties without both petroleum based homogenizing agent and Banana peel extract Homogenizer.**

| **Temperature** | **Dynamic properties** | **Without both homogenizing agent and Banana peel extract *Homogenizer*** |
|---|---|---|
| **0°C** | E' (MPa) | 33.89 - 33.91 |
| **0°C** | E" (MPa) | 5.07 - 5.09 |
| **0°C** | Tan delta | 0.1420 - 0.1620 |
| **20°C** | E' (MPa) | 25.10 - 25.50 |
| **20°C** | E" (MPa) | 3.25 - 3.65 |
| **20°C** | Tan delta | 0.1260 - 0.1460 |
| **60°C** | E' (MPa) | 16.50 - 16.90 |
| **60°C** | E" (MPa) | 1.74 - 2.14 |
| **60°C** | Tan delta | 0.1060 - 0.1260 |

**Table 4. Physical properties without both petroleum based homogenizing agent and Banana peel extract Homogenizer**

| **Description** | **Sample type** | **Hardness (Shore A)** | **M 100 (MPa)** | **M 300 (MPa)** | **Tensile strength (MPa)** | **EB (%)** | **Tear strength (N/mm)** |
|---|---|---|---|---|---|---|---|
| Without both Homogenizing agent and Banana peel *extract Homogenizer* | Unaged | 67.70 - 8.70 | 2.54 - 2.94 | 12.50 - 12.90 | 22.10 - 22.50 | 468 - 469 | 67.18 - 67.58 |
| | Aged | 72.5 - 3.50 | 3.90 - 4.30 | 10.70 - 11.10 | 20.40 - 20.80 | 345 - 345 | 44.8 - 45.200 |

### Conclusion

1. Dynamic stiffness is significantly less in this compound as compared to compound with homogenizing agent and banana peel extract homogenizer.
2. Drop in tear strength of aged specimen is highly significant as compared to compound with homogenizing agent and banana peel extract homogenizer.

### Experiment 4

This experiment describes compounds mixed namely :
(a) Without both petroleum based homogenizing agent and Banana peel extract Homogenizer, and
(b) With 1 PHR banana peel extract homogenizer

**Table 5. Formulation of the compound recipe with 1 PHR Banana peel extract homogenizer**

| **Ingredients** | **Dosage range (PHR)** | **Without petroleum based homogenizing agent and without Banana peel extract Homogenizer Compound (PHR)** | **1 PHR Banana peel *extract Homogenizer* (PHR)** |
|---|---|---|---|
| **Natural Rubber (NR)** | 1 - 100 | 50 | 50 |
| **Poly Butadiene rubber (BR)** | 1 - 100 | 30 | 30 |
| **SBR** | 1 - 100 | 20 | 20 |
| **Banana peel extract Homogenizer** | 0.1 - 15 | 0 | 1 |
| **Homogenizing Agent** | 1 - 4 | 0 | 0 |
| **Carbon Black** - **HAF** | 20 - 60 | 40 | 40 |
| **Silica** | 2-10 | 10 | 10 |
| **Activator** - **Cure package*** | 0.5 - 25 | 14 | 14 |
| *Rubber chemicals as per standard formulations were added. | | | |

**Table 6. MDR data of compounds without petroleum based homogenizing agent and 1 PHR of banana peel extract homogenizer.**

| **Description** | **M_{L} (dNm)** | **M_{H} (dNm)** | **Tₛ₂ (min)** | **T_{C 90} (min)** |
|---|---|---|---|---|
| **Without both Homogenizing agent and Banana peel extract Homogenizer.** | 2.60 - 3.00 | 20.40 - 20.80 | 2.80 - 3.20 | 5.50 - 5.90 |
| **With 1 PHR Banana peel extract Homogenizer.** | 3.08 - 3.48 | 20.55 - 20.95 | 1.92 - 2.32 | 3.75 - 4.15 |

**Table 7. Dynamic mechanical properties without petroleum based homogenizing agent and 1 PHR banana peel extract homogenizer.**

| **Temperature** | **Dynamic properties** | **Without both homogenizing agent and Banana peel extract Homogenizer** | **With 1 PHR Banana peel extract Homogenizer** |
|---|---|---|---|
| **0°C** | E' (MPa) | 33.89 - 33.91 | 33.80 - 34.20 |
| **0°C** | E" (MPa) | 5.07 - 5.09 | 4.37 - 4.77 |
| **0°C** | Tan delta | 0.1420 - 0.1620 | 0.1244 - 0.1444 |
| **20°C** | E' (MPa) | 25.10 - 25.50 | 26.10 - 26.50 |
| **20°C** | E" (MPa) | 3.25 - 3.65 | 3.04 - 3.44 |
| **20°C** | Tan delta | 0.1260 - 0.1460 | 0.1132 - 0.1332 |
| **60°C** | E' (MPa) | 16.50 - 16.9 0 | 16.80 - 17.20 |
| **60°C** | E" (MPa) | 1.74 - 2.14 | 1.63 - 2.03 |
| **60°C** | Tan delta | 0.1060 - 0.1260 | 0.0978 - 0.1178 |

**Table 8. Physical properties without petroleum based homogenizing agent and 1 PHR banana peel extract Homogenizer.**

| **Description** | **Sample type** | **Hardness (Shore A)** | **M 100 (MPa)** | **M 300 (MPa)** | **Tensile strength (MPa)** | **EB (%)** | **Tear strength (N/mm)** |
|---|---|---|---|---|---|---|---|
| **Without both petroleum based Homogenizing agent and Banana peel extract Homogenizer** | Unaged | 67.70 - 8.70 | 2.54 - 2.94 | 12.5 - 12.90 | 22.10 - 22.50 | 468 - 469 | 67.18 - 67.58 |
| | Aged | 72.50 - 3.50 | 3.90 - 4.30 | 10.70 - 11.10 | 20.40 - 20.80 | 345 - 346 | 44.80 - 45.20 |
| **With 1 PHR Banana peel extract Homogenizer** | Unaged | 69.30 - 70.30 | 2.72 - 3.12 | 7.44 - 7.84 | 22.60 - 23.00 | 442 - 443 | 57.80 - 58.20 |
| | Aged | 72.30 - 73.30 | 3.93 - 4.33 | 10.33 - 10.73 | 19.36 - 19.76 | 337 - 338 | 54.97 - 55.37 |

### Conclusion

1. Tc90 and Ts2 is lower in compound with banana peel extract homogenizer as compared to the compound- without petroleum based homogenizing agent. It indicates that banana peel extract homogenizer has shown considerable effect on the cure characteristics.
2. From dynamical mechanical analyzer, tan delta at 60°C is showing lower value in banana peel extract homogenizer compound which is good for ultimate performance properties of rubber product.
3. Drop in Tear strength after heat aging in banana peel extract homogenizer compound is lesser while other mechanical properties are comparable with compound- without petroleum based homogenizing agent.

### Experiment 5

This experiment describes compounds mixed with 2 PHR and 4 PHR Banana peel extract homogenizer

**Table 9. Formulation of the compound recipe with 2 PHR and 4 PHR Banana peel extract homogenizer**

| **Ingredients** | **Dosage range (PHR)** | **2 PHR** | **4 PHR** |
|---|---|---|---|
| **Natural Rubber (NR)** | 25 - 75 | 50 | 50 |
| **Poly Butadiene rubber (BR)** | 25 - 75 | 30 | 30 |
| **SBR** | 15 - 55 | 20 | 20 |
| **Banana peel extract Homogenizer** | 0.1 - 15 | 2 | 4 |
| **Carbon Black** - **HAF** | 20 - 60 | 40 | 40 |
| **Silica** | 2-10 | 10 | 10 |
| **Activator** - **Cure package*** | 0.5 - 25 | 14 | 14 |
| *Rubber chemicals as per standard formulations were added. | | | |

**Table 10. MDR data of compound with 2 PHR and 4 PHR Banana peel extract homogenizer**

| **Description** | M_{L} (dNm) | M_{H} (dNm) | Tₛ₂ (min) | T_{C90}(min) |
|---|---|---|---|---|
| 2 PHR | 3.33 - 3.73 | 22.31 - 22.71 | 2.12 - 2.52 | 4.45 - 4.85 |
| 4 PHR | 3.27 - 3.67 | 21.08 - 21.48 | 1.55 - 1.95 | 3.52 - 3.92 |

**Table 11. Dynamic mechanical properties with 2PHR and 4PHR banana peel extract homogenizer**

| **Temperature** | **Dynamic properties** | **2 PHR** | **4 PHR** |
|---|---|---|---|
| **0°C** | E' (MPa) | 32.4 - 32.8 | 36.50 - 36.90 |
| **0°C** | E" (MPa) | 4.41 - 4.81 | 5.41 - 5.81 |
| **0°C** | Tan delta | 0.132 - 0.152 | 0.143 - 0.163 |
| **20°C** | E' (MPa) | 25. 90 - 26.30 | 28.30 - 28.70 |
| **20°C** | E" (MPa) | 3.10 - 3.50 | 3.72 - 4.12 |
| **20°C** | Tan delta | 0.117 - 0.137 | 0.127 - 0.147 |
| **60°C** | E' (MPa) | 17.10 - 17.50 | 19.40 - 19.80 |
| **60°C** | E" (MPa) | 1.75 - 2.15 | 2.29 - 2.69 |
| **60°C** | Tan delta | 0.103 - 0.123 | 0.117 - 0.137 |

**Table 12. Physical properties with 2 PHR and 4 PHR Banana peel extract homogenizer**

| **Description** | **Sample type** | **Hardness (Shore A)** | **M 100 (MPa)** | **M 300 (MPa)** | **Tensile strength (MPa)** | **EB (%)** |
|---|---|---|---|---|---|---|
| 2 PHR | Unaged | 69.00-70.00 | 2.48 - 2.88 | 12.09 - 12.49 | 22.49 - 22.89 | 480 - 481 |
| 4 PHR | Unaged | 69.90 - 70.90 | 2.50 - 2.90 | 11.52 - 11.92 | 23.41 - 23.81 | 524 - 525 |

### Conclusion

1. Scorch time and cure time are decreasing with increase in doses of banana peel extract homogenizer in rubber compound. It shows that banana peel extract homogenizer has faster cure behavior in rubber compound.
2. By increasing the doses of banana peel extract homogenizer in rubber compound, M300 modulus is dropping down but elongation at break is increasing significantly.
3. Dynamic mechanical properties are found very close with increasing the doses of Banana peel extract in rubber compound.
4. By increasing the doses, there is no significant impact on the DMA properties. But physical properties are affected significantly.

### Experiment 6

This experiment describes banana peel extract homogenizer was used in formulation to compare with petroleum based homogenizing agent and banana peel extract homogenizer recipe

**Table 13. Formulation of the compound recipe compared with 1 PHR petroleum based homogenizing agent and 1 PHR banana peel extract homogenizer recipe**

| **Ingredients** | **Dosage range (PHR)** | **Petroleum based homogenizing agent (PHR)** | **Banana peel extract Homogenizer (PHR)** |
|---|---|---|---|
| **Natural Rubber (NR)** | 1 - 100 | 50 | 50 |
| **Poly Butadiene rubber (BR)** | 1 - 100 | 30 | 30 |
| **Styrene Butadiene Rubber (SBR)** | 1 - 100 | 20 | 20 |
| ***Banana peel* extract Homogenizer** | 0.1 - 15 | 0 | 1 |
| **Homogenizing Agent** | 1 - 4 | 1 | 0 |
| **Carbon Black - HAF** | 10-80 | 40 | 40 |
| **Silica** | 2-10 | 10 | 10 |
| **Activator - Cure package*** | 0.5 - 25 | 14 | 14 |
| *Rubber chemicals as per standard formulations were added. | | | |

**Table 14. MDR data of compound with 1 PHR petroleum based homogenizing agent and 1 PHR banana peel extract homogenizer**

| **Description** | **M_{L} (dNm)** | **M_{H} (dNm)** | **Tₛ₂ (min)** | **T_{C90} (min)** |
|---|---|---|---|---|
| **With petroleum based homogenizing agent** | 2.85 - 3.25 | 20.79 - 21.19 | 2.43 - 2.83 | 4.54 - 4.94 |
| **Banana peel extract Homogenizer** | 3.08 - 3.48 | 20.55 - 20.95 | 1.92 - 2.32 | 3.75 - 4.15 |

**Table 15. Mooney viscosity data with 1 PHR petroleum based homogenizing agent and 1 PHR banana peel extract homogenizer**

| **Description** | **ML (1+ 1.5) @135°C (MU)** | **T₅ (min.)** |
|---|---|---|
| **With petroleum based homogenizing agent** | 71.57 - 72.57 | 11.06 - 12.06 |
| **With Banana peel bio-extract homogenizer** | 77.14 - 78.14 | 9.16 - 10.16 |

**Table 16. Dynamic mechanical properties with 1 PHR petroleum based homogenizing agent and 1 PHR banana peel extract Homogenizer**

| **Temperature** | **Dynamic properties** | **With Petroleum based homogenizing agent** | **With Banana peel extract Homogenizer** |
|---|---|---|---|
| **0°C** | E' (MPa) | 29.80 - 30.20 | 33.80 - 34.20 |
| **0°C** | E" (MPa) | 3.71 - 4.11 | 4.37 - 4.77 |
| **0°C** | Tan delta | 0.1207 - 0.1407 | 0.1244 - 0.1444 |
| **20°C** | E' (MPa) | 23.00 -23.40 | 26.10 - 26.50 |
| **20°C** | E" (MPa) | 2.58 - 2.98 | 3.04 - 3.44 |
| **20°C** | Tan delta | 0.1097 - 0.1297 | 0.1132 - 0.1332 |
| **60°C** | E' (MPa) | 15.00 - 15.40 | 16.80 - 17.20 |
| **60°C** | E" (MPa) | 1.35 - 1.75 | 1.63 - 2.03 |
| **60°C** | Tan delta | 0.0919 - 0.1119 | 0.0978 - 0.1178 |

**Table 17. Physical properties with 1 PHR petroleum based homogenizing agent and 1 PHR Banana peel bio Homogenizer**

| Description | Sample type | Hardness (Shore A) | M 100 (MPa) | M 300 (MPa) | Tensile strength (MPa) | **EB (%)** | Tear strength (N/mm) |
|---|---|---|---|---|---|---|---|
| **With** 1 **PHR Petroleum based homogenizing agent** | Unaged | 68.50 - 69.50 | 2.67 - 3.07 | 13.29 - 13.69 | 22.37 - 22.77 | 451 - 452 | 56.22 - 56.62 |
| | Aged | 72.00 - 73.00 | 3.86 - 4.26 | 16.68 - 17.08 | 19.62 - 20.02 | 347 - 348 | 19.62 - 20.02 |
| **With** 1 **PHR Banana peel extract Homogenizer** | Unaged | 69.30 - 70.30 | 2.72 - 3.12 | 7.44 - 7.84 | 22.60 - 23.00 | 442 - 443 | 57.80 - 58.20 |
| | Aged | 72.30 - 73.30 | 3.93 - 4.33 | 10.33 - 10.73 | 19.36 - 19.76 | 337 - 338 | 54.97 - 55.37 |

**Table 18 : Cut and chip resistance data with 1 PHR petroleum based homogenizing agent and 1 PHR banana peel extract homogenizer**

| **Description** | **Avg. mass loss (mg)** |
|---|---|
| With 1 PHR petroleum based homogenizing agent | 318.20 - 319.20 |
| With 1 PHR Banana peel extract Homogenizer | 306.10 - 306.90 |

**Table 19: Abrasion resistance data with 1 PHR petroleum based homogenizing agent and 1 PHR banana peel extract homogenizer**

| **Description** | **Average abrasion loss (mm³)** | **ARI (%)** |
|---|---|---|
| With 1 PHR petroleum based homogenizing agent | 46.60 - 47.60 | 317 - 319 |
| With 1 PHR Banana peel extract Homogenizer | 41.70 - 42.70 | 355 - 357 |

### Conclusion

1. Dynamic stiffness is enhanced substantially in banana peel extract homogenizer compound at 0 °C, at 20 °C and at 60 °C in comparison to petroleum based homogenizing agent compound.
2. Tear strength is resistant towards heat aging in banana peel bio-extract homogenizer compound.
3. Abrasion resistance is higher in banana peel bio-extract homogenizer compound in comparison to petroleum based homogenizing agent compound.
4.Cut and chip properties is comparable in both the compounds.
5.Aged and unaged physical properties are retained and comparable in both the compounds.
6. Durability of rubber product is better with banana peel bio-extract homogenizer compound.

### Experiment 7:

This experiment describes compounds mixed with 15 PHR of petroleum based homogenizing agent and banana peel extract homogenizer

**Table 20. Formulation of the compound recipe with 15 PHR of petroleum based homogenizing agent and banana peel bio homogenizer**

| **Ingredients** | **Dosage range (PHR)** | **Petroleum based homogenizing agent (PHR)** | **Banana peel extract Homogenizer (PHR)** |
|---|---|---|---|
| Natural Rubber (NR) | 25 - 75 | 70 | 70 |
| **Chlorobutyl** Rubber | 25 - 75 | 30 | 30 |
| ***Petroleum based homogenizing agent*** | 0.1 - 15 | 15 | 0 |
| **Banana peel extract Homogenizer** | 0.1 - 15 | 0 | 15 |
| **Carbon Black** - **GPF** | 20 - 70 | 60 | 60 |
| **Activator** - **Cure package*** | 0.5 - 25 | 14 | 14 |
| *Rubber chemicals as per standard formulations were added. | | | |

**Table 21 . Dynamic mechanical properties with 15 PHR of Banana peel extract homogenizer and petroleum based homogenizing agent**

| **Temperature** | **Dynamic properties** | **With Petroleum based homogenizing agent (15 PHR)** | **With Banana peel extract Homogenizer (15 PHR)** |
|---|---|---|---|
| **60°C** | E' (MPa) | 9.76 - 10.16 | 10.00 -10.40 |
| **60°C** | E" (MPa) | 2.35 - 2.75 | 2.49 - 2.89 |
| **60°C** | Tan delta | 0.246 -0.266 | 0.254 - 0.274 |

**Table 22. Physical properties with 15 PHR of Banana peel extract homogenizer and petroleum based homogenizing agent**

| **Description** | **Sample type** | **Hardness (Shore A)** | **M 100 (MPa)** | M **300 (MPa)** | **Tensile strength (MPa)** | **EB (%)** |
|---|---|---|---|---|---|---|
| **With Petroleum based homogenizing agent (15PHR)** | Unaged | 51-53 | 0.94 - 1.34 | 2.63 - 3.03 | 7.77 - 8.17 | 840 |
| **With Banana peel extract Homogenizer (15 PHR)** | Unaged | 51-53 | 1.08 - 1.23 | 2.61 - 3.01 | 7.85 - 8.25 | 841 |

### Conclusion:

1. By increasing the dosage of both petroleum-based homogenizing agent and banana peel extract homogenizer, there is comparable tan delta at 60°C.
2. Physicals are comparable in both the compounds.

The above results and tables thus establish the superior technical effect of the claimed invention and meet the objective of the claimed invention.

## Claims

1. A curable rubber composition comprising:
a) a rubber component in an amount of 100 PHR;
b) at least one filler in an amount from 10 to 110 PHR;
**characterized in that** said curable rubber composition comprises alpha-tocopherol as an extractable residue from banana peels in an amount from 0.1 to 15 PHR.

2. The curable rubber composition as claimed in claim 1, wherein the rubber component is selected from polybutadiene rubber, styrene butadiene rubber, natural rubber, polyisoprene or a mixture thereof.

3. The curable rubber composition as claimed in claim 1, wherein the filler is selected from hydrocarbon filler or mineral filler or mixtures thereof.

4. The curable rubber composition as claimed in claim 3, wherein the hydrocarbon filler is selected from carbon black, graphene, carbon nano tubes, and fullerene.

5. The curable rubber composition as claimed in claim 3, wherein the mineral filler is selected from silica, nano clay, inorganic oxides and inorganic hydroxides.

6. The curable rubber composition as claimed in claim 1, further comprising a curative package in an amount from 0.5 to 15 PHR.

7. The curable rubber composition as claimed in claim 6, wherein the curative package is selected from sulphur, peroxide, or metal-oxide ingredients.

8. The curable rubber composition as claimed in claim 7, wherein the metal-oxide ingredient is zinc oxide.

9. A cross-linked rubber composition, **characterized in that** it is obtained by cross-linking a rubber composition according to one of claims 1 to 8.

10. A method of preparing a tyre, comprising the steps of:
- providing a tyre assembly comprising a cross-linkable rubber composition according to one of claims 1 to 8; and
- cross-linking at least the cross-linkable rubber composition according to one of claims 1 to 8 in the tyre assembly.

11. A tyre comprising a tread, **characterized in that** the tread comprises a cross-linked rubber composition according to claim 9.
